# EUROPEAN PATENT APPLICATION

(11) **EP 4 715 977 A2**
(43) Date of publication of application: **25.03.2026**
(21) Application number: 25223512.2
(22) Date of filing: 15.12.2025
(51) Int. Cl.: H01M 50/15, H01M 50/176, H01M 50/188

(54) **BATTERY TOP COVER ASSEMBLY WITH WELDED TERMINAL POSTS**

(30) Priority: 09.06.2025 CN 202510757742
(71) Applicant: Ningbo Zhenyu Auto Parts Co., Ltd., Ningbo Zhejiang (CN)
(72) Inventor: WU, Liang'en, Zhejiang, Ningbo (CN); TAN, Jiben, Ningbo (CN); MA, Shanlin, Ningbo (CN); LI, Shuai, Ningbo (CN)
(74) Representative: Metida

(57) **Abstract**

Disclosed is a battery top cover assembly with welded terminal posts, which includes a top cover plate, terminal post structures, caps, sealing rings, upper insulating parts, and a lower insulating part. Two ends of the top cover plate are provided with mounting holes in the length direction; a terminal post structure is mounted in each mounting hole through a cap, a sealing ring, an upper insulating part, and the lower insulating part; a terminal post portion of the terminal post structure in one mounting hole includes a copper part and an aluminum part; and the terminal post structure in the other mounting hole is an aluminum terminal post, thereby improving production quality and yield and reducing production cost.

## Description

### TECHNICAL FIELD

The present disclosure relates to the technical field of battery top covers for battery housings of new energy vehicles, and particularly, to a battery top cover assembly with welded terminal posts.

### BACKGROUND

The battery top cover assembly is a critical component of a battery housing of a new energy vehicle, and typically includes a top cover plate, a positive terminal post, and a negative terminal post. The positive terminal post is made of aluminum, while the negative terminal post is made by combining copper and aluminum materials. During assembly, the positive and negative terminal posts are fitted into two mounting holes of the top cover plate through insulating parts respectively, and then fixedly mounted on the top cover plate by means of laser welding through auxiliary mounting parts. However, the battery top cover assembly assembled by this method has the following defects.

1. During laser welding between the auxiliary mounting parts and the top cover plate, excessive heat generation causes deformation of the top cover plate. This results in excessive warping extent of the top cover plate, leading to a high rejection rate of the battery top cover assembly assembled through welding.

2. The positive terminal post is a copper-aluminum terminal post formed by stamping copper-aluminum composite strips through punching machines in batch production. However, this method generates excessive waste materials in the forming process of the copper-aluminum terminal post, resulting in low raw material utilization rates and significant material waste. Additionally, the high purchasing cost of the copper-aluminum composite strips increases production costs.

Therefore, based on the above defects, a battery top cover assembly capable of solving the above technical problems is urgently needed.

### SUMMARY

An objective of the present disclosure is to provide a battery top cover assembly with welded terminal posts to solve the above technical shortcomings.

A battery top cover assembly with welded terminal posts provided by the present disclosure includes:
a top cover plate, two ends of which are provided with mounting holes in the length direction;
two terminal post structures, each including a terminal post portion matching the mounting hole and a terminal post convex ring arranged around the periphery of the terminal post portion, and the top of the terminal post portion being provided with a conductive contact protrusion and a plurality of convex posts;
a cap positioned above each mounting hole, and provided with a center hole matching the conductive contact protrusion, riveting holes matching the convex posts respectively, and a pressing portion positioned on the periphery of a region with the center hole and the riveting holes;
a sealing ring positioned below each mounting hole and fitted with the lower surface of the top cover plate; and
an upper insulating part positioned above each mounting hole, fitted with the upper surface of the top cover plate, and provided with a first through hole corresponding to a respective mounting hole.

Each terminal post structure moves from bottom to top, to enable the terminal post portion to sequentially pass through the sealing ring, the mounting hole, and the first through hole and enable the terminal post convex ring to abut against the sealing ring; the cap covers at least a portion of a connecting ring and at least a portion of the upper insulating part, and each convex post passes through a respective riveting hole; after the top of each convex post is riveted, the periphery of the top of each convex post forms a riveting convex portion; the riveting convex portion is pressed on the edge of the upper port of the riveting hole, such that the terminal post structure, the cap, the sealing ring, and the upper insulating part are assembled and fixed on the top cover plate; the terminal post portion of the terminal post structure in one mounting hole includes a copper part and an aluminum part, the aluminum part is welded and fixed to the top of the copper part, the conductive contact protrusion is formed on the top of the aluminum part, the plurality of convex posts are formed on the top of the copper part, the plurality of convex posts extend after passing through the connecting ring positioned on the periphery of the conductive contact protrusion on the aluminum part, and the terminal post convex ring is formed on the periphery of the copper part; and the terminal post structure in the other mounting hole is an aluminum terminal post.

The above battery top cover assembly with welded terminal posts is characterized in that a welding method by which the aluminum part is welded and fixed to the top of the copper part is laser welding or ultrasonic welding, and a welding interface layer is formed between the bottom of the aluminum part and the top of the copper part.

According to the above battery top cover assembly with welded terminal posts, during laser welding, the formed welding interface layer is at least one annular layer.

According to the above battery top cover assembly with welded terminal posts, the cap includes a cap body, the pressing portion is a pressing ring plate arranged around the periphery of the cap body, the center hole and the riveting holes are formed in the cap body, an annular surface surrounding the conductive contact protrusion on the terminal post portion is higher than the top surface of the upper insulating part, the cap body covers the top of the terminal post portion and the annular surface of the terminal post portion, and the pressing ring plate is abutted against the annular surface surrounding the conductive contact protrusion on the terminal post portion.

According to the above battery top cover assembly with welded terminal posts, the edge of the upper port of each riveting hole is sunken to form a continuous annular concave, the inner diameter of the annular concave is greater than the inner diameter of the riveting hole, and the riveting convex portion is pressed into the annular concave, such that a step portion is formed between the annular concave and the riveting hole.

According to the above battery top cover assembly with welded terminal posts, an annular convex rib surrounding the mounting hole is formed on the upper surface of a region at the mounting hole on the top cover plate, a positioning space is formed between the inner wall of the annular convex rib and the upper surface of the region at the mounting hole on the top cover plate, the upper insulating part is positioned in the positioning space, and the periphery of the upper insulating part is abutted against the inner wall of the annular convex rib.

According to the above battery top cover assembly with welded terminal posts, a first annular convex strip is formed on the outer edge of the upper surface of the upper insulating part, and the outer peripheral wall of the pressing ring plate is abutted against the inner wall of the first annular convex strip.

According to the above battery top cover assembly with welded terminal posts, a second annular convex strip is formed on the inner edge of the lower surface of the upper insulating part, and is inserted between the inner wall of the mounting hole and the outer wall of the terminal post portion, and the outer wall and the inner wall of the second annular convex strip are respectively abutted against the inner wall of the mounting hole and the outer wall of the terminal post portion.

The above battery top cover assembly with welded terminal posts further includes a lower insulating part fitted with the lower surface of the top cover plate. The lower insulating part is provided with two second through holes corresponding to the mounting holes respectively, and the sealing rings are positioned in the two second through holes respectively.

According to the above battery top cover assembly with welded terminal posts, a sinking slot is formed on the lower surface of the region at each mounting hole on the top cover plate, an insulating convex ring is formed on the upper edge of each second through hole of the lower insulating part, the insulating convex ring is matched in the sinking slot, the outer peripheral wall of the insulating convex ring is in contact with the inner peripheral wall of the sinking slot, the inner peripheral wall of the second through hole of the lower insulating part is provided with an annular inner concave, and the outer peripheral portion of the terminal post convex ring is matched in the annular inner concave; and the annular inner concave and the terminal post convex ring are both in a square shape, and the insulating convex ring and the sinking slot are also arranged in a square shape.

The battery top cover assembly with welded terminal posts described in the present disclosure has the following beneficial effects.
1. The terminal post convex ring of the terminal post structure is fastened to the lower insulating part, then the convex posts on the terminal post structure are riveted with the riveting holes in the cap, and the cap is pressed against the upper insulating part, such that the terminal post structure is assembled on the top cover plate. In this assembly method, the convex posts are riveted, and the riveting convex portion formed through riveting is limited to the upper edge of the riveting hole, such that during riveting, force is only applied on the cap and the convex posts, and acting force on the top cover plate is small to prevent deformation of the top cover plate. Therefore, the battery top cover assembly assembled with the terminal post structures is high in quality, and the production yield is improved.
2. The upper insulating part seals between the pressing ring plate and the upper surface of the top cover plate, and the second annular convex strip seals between the terminal post portion and the mounting hole, thereby improving the sealing performance of the upper side of the battery top cover assembly.
3. The terminal post convex ring and the lower surface of the top cover plate are insulated through the sealing ring and the insulating convex ring, and the sealing ring also plays a sealing role, thereby further improving the sealing property of the battery top cover assembly.
4. The annular convex rib can enhance the strength of the top cover plate, such that the deformation of the top cover plate is small after a battery of a new energy vehicle assembled with the battery top cover assembly is inflated. Additionally, the upper insulating part is positioned.
5. In the terminal post structure including the copper part and the aluminum part, the copper part and the aluminum part are respectively prepared from singly purchased copper plates and aluminum plates, and the formed aluminum part and the formed copper part are in surface contact and fixed to each other through ultrasonic welding or laser welding. The formed terminal post structure reduces manufacturing costs. In addition, the welding interface layer in the formed terminal post structure is greater than 0.1 mm, which meets a strength requirement for composite connection of the copper-aluminum terminal post.

### BRIEF DESCRIPTION OF THE DRAWINGS

FIG. 1 is a schematic cross-sectional view of a battery top cover assembly;
FIG. 2 is a schematic structural diagram of a battery top cover assembly;
FIG. 3 is a schematic structural diagram of a back of a battery top cover assembly;
FIG. 4 is a schematic structural diagram of assembling a terminal post structure formed through welding in one mounting hole of a top cover plate;
FIG. 5 is an enlarged diagram of part A;
FIG. 6 is a three-dimensional view of a terminal post structure formed through welding;
FIG. 7 is a sectional view of a terminal post structure formed through ultrasonic welding;
FIG. 8 is a schematic diagram of a back of a terminal post structure formed through ultrasonic welding;
FIG. 9 is a sectional view of a terminal post structure formed through laser welding;
FIG. 10 is a schematic diagram of a back of a terminal post structure formed through laser welding;
FIG. 11 is an exploded view of a terminal post structure formed through laser welding;
FIG. 12 is a schematic structural diagram of assembling an aluminum terminal post in another mounting hole of a top cover plate;
FIG. 13 is a schematic structural diagram of an aluminum terminal post;
FIG. 14 is a sectional view of an aluminum terminal post;
FIG. 15 is a schematic structural diagram of forming a riveting convex part;
FIG. 16 is a first schematic structural diagram of an upper insulating part;
FIG. 17 is a second schematic structural diagram of an upper insulating part;
FIG. 18 is a first schematic structural diagram of a lower insulating part;
FIG. 19 is a second schematic structural diagram of a lower insulating part;
FIG. 20 is a first schematic structural diagram of a top cover plate; and
FIG. 21 is a second schematic structural diagram of a top cover plate.

In the figures, 1: top cover plate; 11: mounting hole; 12: annular convex rib; 13: sinking slot; 14: cavity; 15: positioning space;
2: terminal post structure; 21: terminal post portion; 211: copper part; 212: aluminum part; 213: connecting ring; 214: annular surface; 22: terminal post convex ring; 23: convex post; 231: inner bevel; 232: riveting convex portion; 24: conductive contact protrusion; 25: welding interface layer;
3: cap; 31: cap body; 310: center hole; 311: riveting hole; 312: annular concave; 313: outer bevel; 314: step portion; 32: pressing portion;
4: upper insulating part; 41: first annular convex strip; 42: first through hole; 43: second annular convex strip;
5: sealing ring; 6: lower insulating part; 61: insulating convex ring; 62: second through hole; and 63: annular inner concave.

### DESCRIPTION OF THE EMBODIMENTS

The technical solutions in the embodiments of the present disclosure will be clearly and completely described below with reference to the drawings in the embodiments of the present disclosure. It is apparent that the described embodiments are not all embodiments but only part of the embodiments of the present disclosure. All other embodiments obtained by those of ordinary skill in the art on the basis of the embodiments in the present disclosure shall fall within the scope of protection of the present disclosure.

### Embodiment:

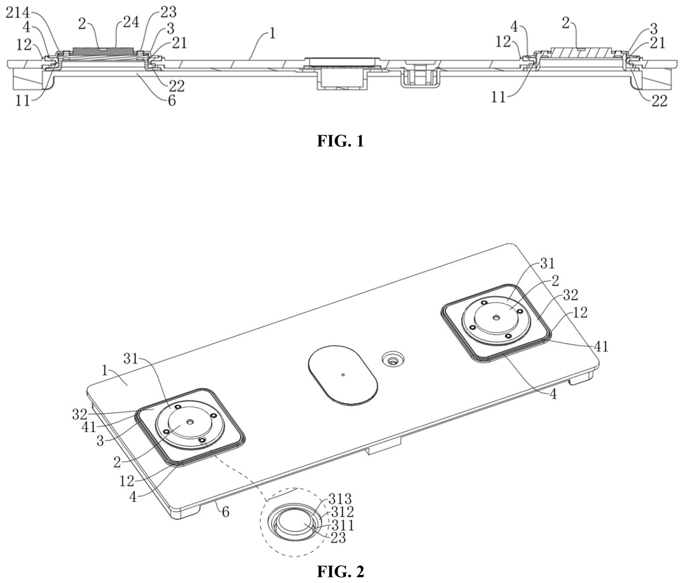

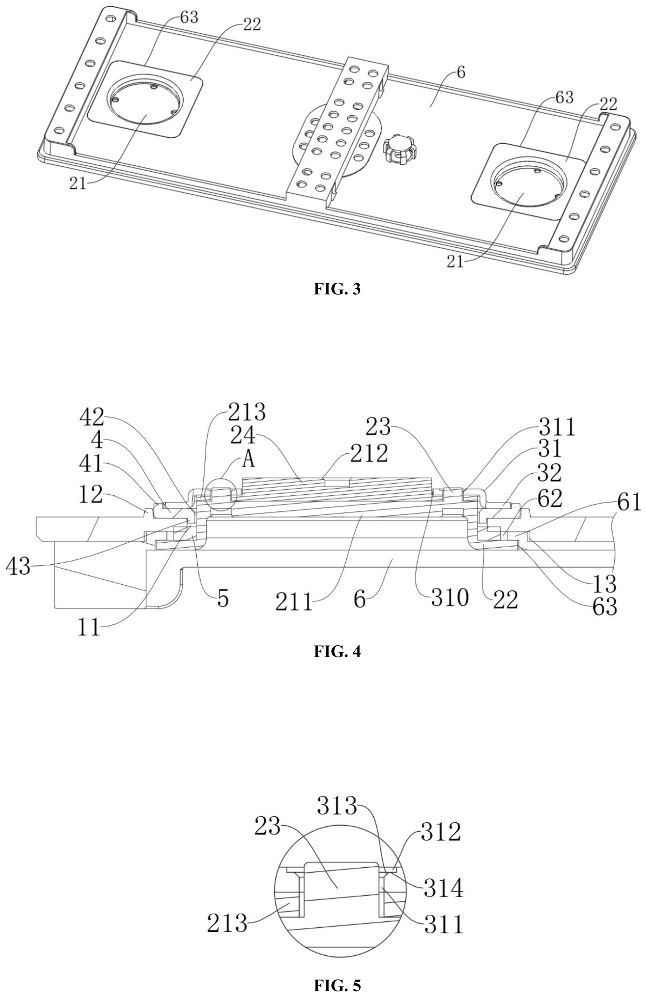

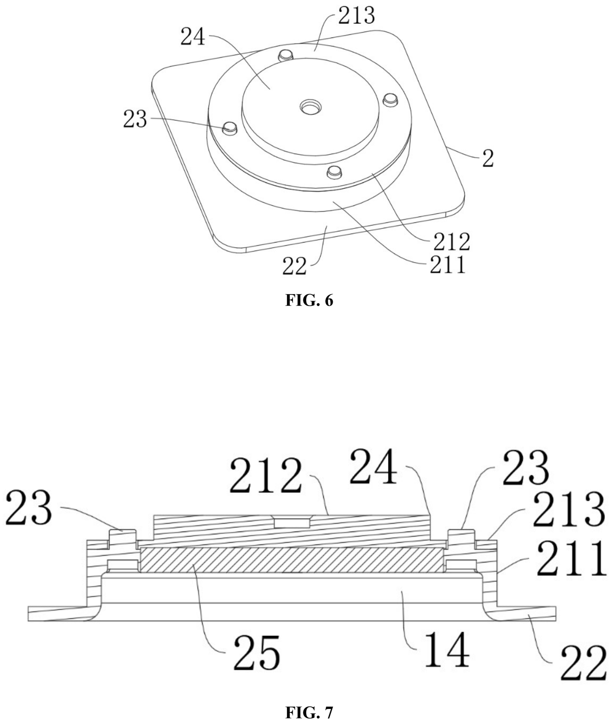

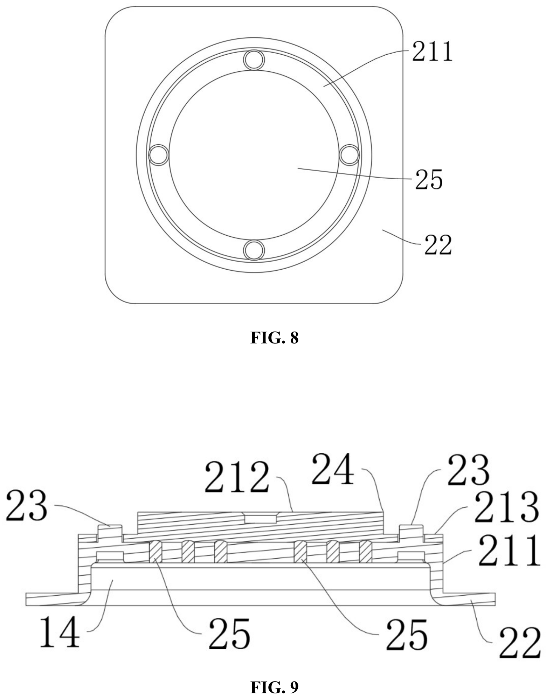

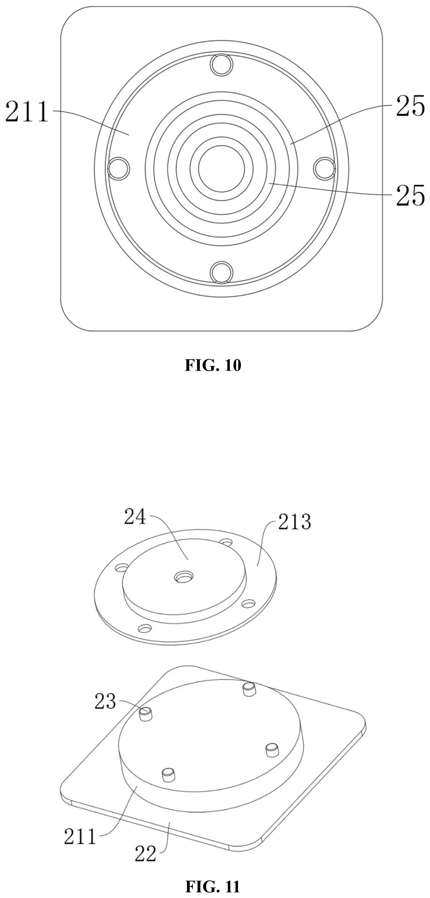

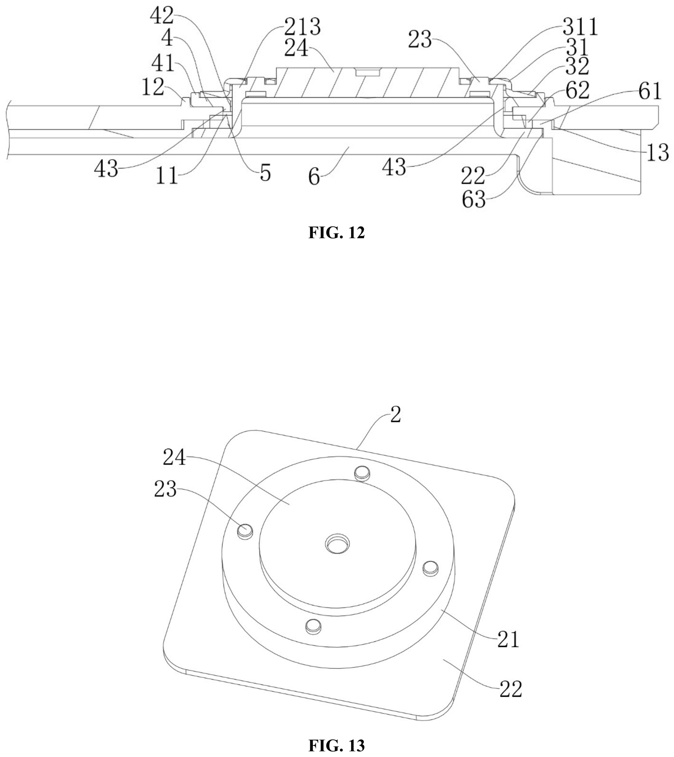

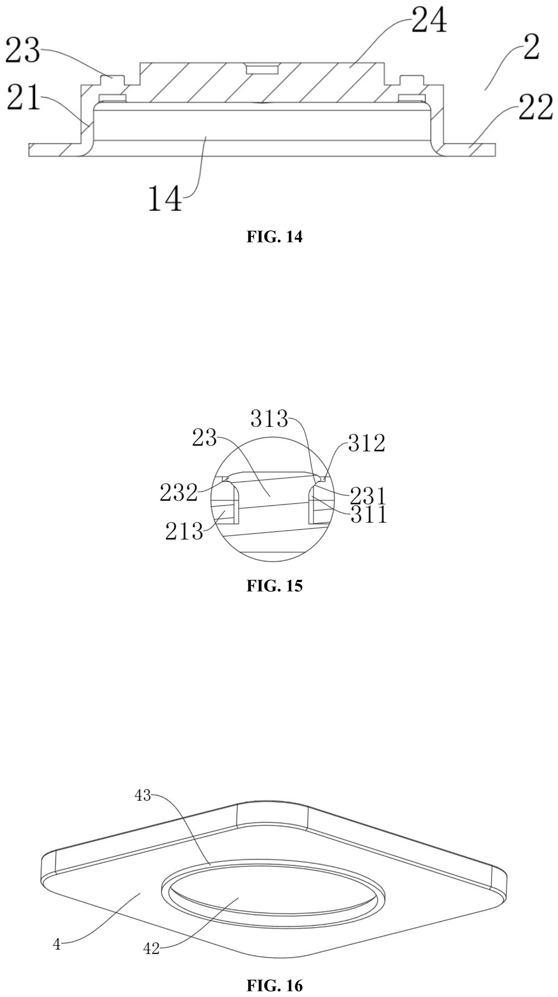

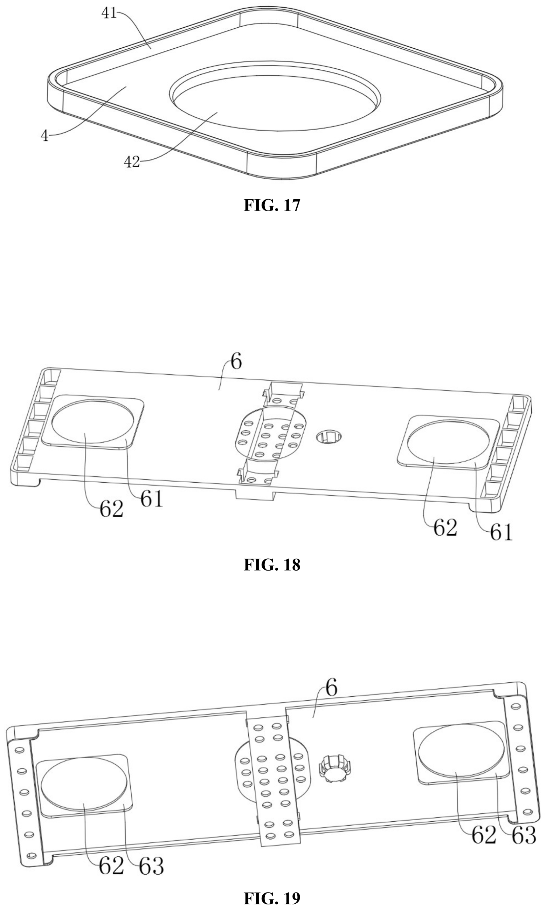

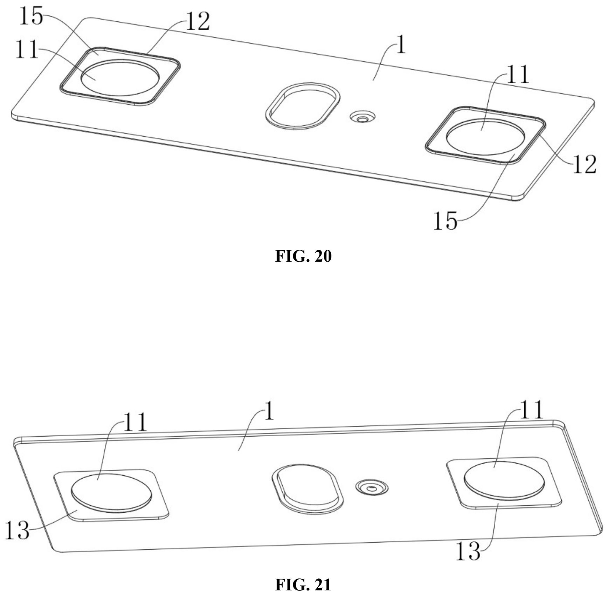

As shown in FIG. 1 to FIG. 21, a battery top cover assembly with welded terminal posts described in the embodiment includes a top cover plate 1, two terminal post structures 2, two caps 3, two sealing rings 5, two upper insulating parts 4, and a lower insulating part 6. The top cover plate 1 is an aluminum plate; the two caps 3 are made of aluminum; the two sealing rings 5 are made of rubber; and the two upper insulating parts 4 and the lower insulating part 6 are made of plastics.

Two ends of the top cover plate 1 are provided with mounting holes 11 in the length direction. Each terminal post structure 2 includes a terminal post portion 21 matching the mounting hole 11 and a terminal post convex ring 22 arranged on the periphery of the terminal post portion 21, and the top of the terminal post portion 21 is provided with a conductive contact protrusion 24 and a plurality of convex posts 23. The two caps 3 are respectively positioned above the mounting holes 11, and each cap 3 is provided with a center hole 310 matching the conductive contact protrusion 24, riveting holes 311 matching the convex posts 23 respectively, and a pressing portion 32 positioned on the periphery of a region with the center hole 310 and the riveting holes 311. The two sealing rings 5 are respectively positioned below the mounting holes 11, each sealing ring 5 is fitted with the lower surface of the top cover plate 1, and the sealing rings 5 and the mounting holes 11 are coaxially arranged. The two upper insulating parts 4 are respectively positioned above the mounting holes 11, each upper insulating part 4 is fitted with the upper surface of the top cover plate 1, and each upper insulating part 4 is provided with a first through hole 42 corresponding to a respective mounting hole 11. The lower insulating part 6 is fitted with the lower surface of the top cover plate 1, the lower insulating part 6 is provided with two second through holes 62 corresponding to the mounting holes 11 respectively, and the sealing rings 5 are respectively positioned in the two second through holes 62.

When each terminal post structure 2 is assembled, each terminal post structure 2 moves from bottom to top, to enable the terminal post portion 21 to sequentially pass through the sealing ring 5, the mounting hole 11, and the first through hole 42 and enable the terminal post convex ring 22 to abut against the sealing ring 5 and the lower insulating part 6; each cap 3 covers at least a portion of a connecting ring 213 and at least a portion of the upper insulating part 4, and each convex post 23 passes through a respective riveting hole 311; after the top of each convex post 23 is riveted, the periphery of the top of each convex post 23 forms a riveting convex portion 232; the riveting convex portion 232 is pressed on the edge of the upper port of the riveting hole 311, such that the terminal post structure 2, the cap 3, the sealing ring 5, the upper insulating part 4, and the lower insulating part 6 are assembled and fixed on the top cover plate 1; the terminal post portion 21 of the terminal post structure 2 in one mounting hole 11 includes a copper part 211 and an aluminum part 212, the aluminum part 212 is welded and fixed to the top of the copper part 211, the conductive contact protrusion 24 is formed on the top of the aluminum part 212, the plurality of convex posts 23 are formed on the top of the copper part 211, the plurality of convex posts extend after passing through the connecting ring 213 positioned on the periphery of the conductive contact protrusion 24 on the aluminum part 212, the terminal post convex ring 22 is formed on the periphery of the copper part 211, and the terminal post convex ring 22 and the copper part 211 are combined into an integrated copper structure; and the terminal post structure 2 in the other mounting hole 11 is an aluminum terminal post. When the terminal post structure 2 is assembled and fixed, the convex post 23 is riveted and deformed, to enable the cap 3 and the terminal post structure 2 to be fixed to each other; in addition, the pressing portion 32 of the cap 3 is abutted against the upper insulating part 4, and the terminal post convex ring 22 acts on the lower insulating part 6 and the sealing ring 5, such that the terminal post structure 2 is mounted on the top cover plate 1 in an insulating and sealed state; and because acting force of the riveting convex post 23 on the top cover plate 1 is small, the top cover plate 1 is not easily deformed during riveting, thereby improving the production quality and yield of the battery top cover assembly.

Preferably, the copper part 211 is provided with a cavity 14, such that during welding, a welding head or welding energy can perform welding operation via the cavity 14, and the welding is convenient.

In the embodiment, a welding method by which the aluminum part 212 is welded and fixed to the top of the copper part 211 is laser welding or ultrasonic welding, and a welding interface layer 25 is formed between the bottom of the aluminum part 212 and the top of the copper part 211. The welding interface layer 25 is formed after aluminum and copper are mutually melted through high temperature generated by ultrasonic welding or laser welding and then solidified. During ultrasonic welding or laser welding, energy is applied on the top surface of the cavity 14, and under the action of the welding energy, deep penetration welding is achieved, such that partial copper on the top of the cavity 14 and partial aluminum at the bottom of the aluminum part 212 are mutually melted and solidified, to form the welding fused copper-aluminum interface layer 25 with a thickness of >0.1 mm.

Preferably, during laser welding, the formed welding interface layer 25 is an annular layer, a number of annular layers may be one or more, and a plurality of annular layers are distributed in an annual ring.

In the embodiment, the entire shape of the cap 3 is square, the cap 3 includes a cap body 31, the pressing portion 32 is a pressing ring plate arranged around the periphery of the cap body 31, the center hole 310 and the riveting holes 311 are formed in the cap body 31, an annular surface 214 surrounding the conductive contact protrusion 24 on the terminal post portion 21 is higher than the top surface of the upper insulating part 4, the cap body 31 covers the top of the terminal post portion 21 and the annular surface 214 of the terminal post portion 21, and the pressing ring plate is abutted against the annular surface 214 surrounding the conductive contact protrusion 24 on the terminal post portion 21. The cap body 31 may position the terminal post structure 2, such that the terminal post structure 2 after assembly is relatively stable.

Preferably, the edge of the upper port of each riveting hole 311 is sunken to form a continuous annular concave 312, the inner diameter of the annular concave 312 is greater than the inner diameter of the riveting hole 311, and the riveting convex portion 232 is pressed into the annular concave 312. The annular concave 312 is arranged to accommodate the riveting convex portion 232, to prevent the riveting convex portion 232 formed from excessively protruding the top surface of the cap body 31.

Further preferably, an outer bevel 313 is formed on the edge of a step portion 314 formed between the annular concave 312 and the riveting hole 311, an inner bevel 231 matching the outer bevel 313 is formed between the riveting convex portion 232 and the convex post 23, and the inner bevel 231 is tightly fitted to the outer bevel 313. By arranging the outer bevel 313, the riveting convex portion 232 is more easily formed after the convex post 23 is riveted.

In the embodiment, an annular convex rib 12 surrounding the mounting hole 11 is formed on the upper surface of a region at the mounting hole 11 on the top cover plate 1, a positioning space 15 is formed between the inner wall of the annular convex rib 12 and the upper surface of the region at the mounting hole 11 on the top cover plate 1, the upper insulating part 4 is positioned in the positioning space 15, and the periphery of the upper insulating part 4 is abutted against the inner wall of the annular convex rib 12. The annular convex rib 12 can enhance the strength of the top cover plate 1, such that the deformation of the top cover plate 1 is small after a battery of a new energy vehicle assembled with the battery top cover assembly is inflated. Additionally, the upper insulating part 4 is positioned.

Preferably, a first annular convex strip 41 is formed on the outer edge of the upper surface of the upper insulating part 4, and the outer peripheral wall of the pressing ring plate is abutted against the inner wall of the first annular convex strip 41. The annular convex rib 12, the upper insulating part 4, and the pressing ring plate are arranged in a square shape, to prevent the terminal post structure 2 assembled on the top cover plate 1 from rotating.

In the embodiment, a second annular convex strip 43 is formed on the inner edge of the lower surface of the upper insulating part 4, and is inserted between the inner wall of the mounting hole 11 and the outer wall of the terminal post portion 21, and the outer wall and the inner wall of the second annular convex strip 43 are respectively abutted against the inner wall of the mounting hole 11 and the outer wall of the terminal post portion 21. Such structural configuration mainly achieves reliable positioning of the upper insulating part 4 between the mounting hole 11 and the annular convex rib 12, and the second annular convex strip 43 plays a role in sealing between the inner wall of the mounting hole 11 and the outer wall of the terminal post portion 21.

In the embodiment, a sinking slot 13 is formed on the lower surface of the region at each mounting hole 11 on the top cover plate 1, an insulating convex ring 61 is formed on the upper edge of each second through hole 62 of the lower insulating part 6, the insulating convex ring 61 is matched in the sinking slot 13, the outer peripheral wall of the insulating convex ring 61 is in contact with the inner peripheral wall of the sinking slot 13, the inner peripheral wall of the second through hole of the lower insulating part 6 is provided with an annular inner concave 63, and the outer peripheral portion of the terminal post convex ring 22 is matched in the annular inner concave 63. The annular inner concave 63 and the terminal post convex ring 22 are both in a square shape, and the insulating convex ring 61 and the sinking slot 13 are also arranged in a square shape, such that the terminal post structure 2 after assembly is prevented from rotating. In addition, such structural configuration enables the terminal post structure 2 to be reliably positioned.

## Claims

1. A battery top cover assembly with welded terminal posts, comprising:
a top cover plate (1), two ends of which are provided with mounting holes (11) in the length direction;
two terminal post structures (2), each comprising a terminal post portion (21) matching the mounting hole (11) and a terminal post convex ring (22) arranged around the periphery of the terminal post portion (21), and the top of the terminal post portion (21) being provided with a conductive contact protrusion (24) and a plurality of convex posts (23);
a cap (3) positioned above each mounting hole (11), and provided with a center hole (310) matching the conductive contact protrusion (24), riveting holes (311) matching the convex posts (23) respectively, and a pressing portion (32) positioned on the periphery of a region with the center hole (310) and the riveting holes (311);
a sealing ring (5) positioned below each mounting hole (11) and fitted with the lower surface of the top cover plate (1);
a lower insulating part (6) fitted with the lower surface of the top cover plate (1); and
an upper insulating part (4) positioned above each mounting hole (11), fitted with the upper surface of the top cover plate (1), and provided with a first through hole (42) corresponding to a respective mounting hole (11), wherein the terminal post portion (21) sequentially passes through the sealing ring (5), the mounting hole (11), and the first through hole (42), and the terminal post convex ring (22) is abutted against the sealing ring (5); the cap (3) covers at least a portion of a connecting ring (213) and at least a portion of the upper insulating part (4), and each convex post (23) passes through a respective riveting hole (311); the periphery of the top of each convex post (23) forms a riveting convex portion (232); the riveting convex portion (232) is pressed on the edge of the upper port of the riveting hole (311), such that the terminal post convex ring (22) is fastened to the lower insulating part (6), the cap (3) is pressed against the upper insulating part (4), and the terminal post structure (2), the cap (3), the sealing ring (5), and the upper insulating part (4) are assembled and fixed on the top cover plate (1); the terminal post portion (21) of the terminal post structure (2) in one mounting hole (11) comprises a copper part (211) and an aluminum part (212), the aluminum part (212) is welded and fixed to the top of the copper part (211), the conductive contact protrusion (24) is formed on the top of the aluminum part (212), the plurality of convex posts (23) are formed on the top of the copper part (211), the plurality of convex posts (23) extend after passing through the connecting ring (213) positioned on the periphery of the conductive contact protrusion (24) on the aluminum part (212), and the terminal post convex ring (22) is formed on the periphery of the copper part (211); and the terminal post structure (2) in the other mounting hole (11) is an aluminum terminal post.

2. The battery top cover assembly with welded terminal posts according to claim 1, wherein a welding method by which the aluminum part (212) is welded and fixed to the top of the copper part (211) is laser welding or ultrasonic welding, and a welding interface layer (25) is formed between the bottom of the aluminum part (212) and the top of the copper part (211).

3. The battery top cover assembly with welded terminal posts according to claim 2, wherein during laser welding, the formed welding interface layer (25) is at least one annular layer.

4. The battery top cover assembly with welded terminal posts according to claim 1, wherein the cap (3) comprises a cap body (31), the pressing portion (32) is a pressing ring plate arranged around the periphery of the cap body (31), the center hole (310) and the riveting holes (311) are formed in the cap body (31), an annular surface (214) surrounding the conductive contact protrusion (24) on the terminal post portion (21) is higher than the top surface of the upper insulating part (4), the cap body (31) covers the top of the terminal post portion (21) and the annular surface (214) of the terminal post portion (21), and the pressing ring plate is abutted against the annular surface (214) surrounding the conductive contact protrusion (24) on the terminal post portion (21).

5. The battery top cover assembly with welded terminal posts according to claim 4, wherein the edge of the upper port of each riveting hole (311) is sunken to form a continuous annular concave (312), the inner diameter of the annular concave (312) is greater than the inner diameter of the riveting hole (311), and the riveting convex portion (232) is pressed into the annular concave (312), such that a step portion (314) is formed between the annular concave (312) and the riveting hole (311).

6. The battery top cover assembly with welded terminal posts according to claim 4, wherein an annular convex rib (12) surrounding the mounting hole (11) is formed on the upper surface of a region at the mounting hole (11) on the top cover plate (1), a positioning space (15) is formed between the inner wall of the annular convex rib (12) and the upper surface of the region at the mounting hole (11) on the top cover plate (1), the upper insulating part (4) is positioned in the positioning space (15), and the periphery of the upper insulating part (4) is abutted against the inner wall of the annular convex rib (12).

7. The battery top cover assembly with welded terminal posts according to claim 6, wherein a first annular convex strip (41) is formed on the outer edge of the upper surface of the upper insulating part (4), and the outer peripheral wall of the pressing ring plate is abutted against the inner wall of the first annular convex strip (41).

8. The battery top cover assembly with welded terminal posts according to claim 7, wherein a second annular convex strip (43) is formed on the inner edge of the lower surface of the upper insulating part (4), and is inserted between the inner wall of the mounting hole (11) and the outer wall of the terminal post portion (21), and the outer wall and the inner wall of the second annular convex strip (43) are respectively abutted against the inner wall of the mounting hole (11) and the outer wall of the terminal post portion (21).

9. The battery top cover assembly with welded terminal posts according to claim 8, further comprising the lower insulating part (6) fitted with the lower surface of the top cover plate (1), wherein the lower insulating part (6) is provided with two second through holes (62) corresponding to the mounting holes (11) respectively, and the sealing rings (5) are positioned in the two second through holes (62) respectively.

10. The battery top cover assembly with welded terminal posts according to claim 9, wherein a sinking slot (13) is formed on the lower surface of the region at each mounting hole (11) on the top cover plate (1), an insulating convex ring (61) is formed on the upper edge of each second through hole (62) of the lower insulating part (6), the insulating convex ring (61) is matched in the sinking slot (13), the outer peripheral wall of the insulating convex ring (61) is in contact with the inner peripheral wall of the sinking slot (13), the inner peripheral wall of the second through hole (62) of the lower insulating part (6) is provided with an annular inner concave (63), and the outer peripheral portion of the terminal post convex ring (22) is matched in the annular inner concave (63); and the annular inner concave (63) and the terminal post convex ring (22) are both in a square shape, and the insulating convex ring (61) and the sinking slot (13) are also arranged in a square shape.
